# EUROPEAN PATENT APPLICATION

(11) **EP 4 571 670 A1**
(43) Date of publication of application: **18.06.2025**
(21) Application number: 23217329.4
(22) Date of filing: 15.12.2023
(51) Int. Cl.: G06V 10/25, G06N 3/045, G06N 3/049, G06N 3/096, G06T 3/4007, G06T 3/4046, G06V 10/20, G06V 10/26, G06V 10/44, G06V 10/764, G06V 10/82, G06V 10/36

(54) **OBJECT CLASSIFICATION FROM REDUCED PIXEL DATA**

(71) Applicant: Stichting IMEC Nederland, 5656 AE Eindhoven (NL)
(72) Inventor: ARJMAND, Cina, 5654 EB Eindhoven (NL); TANG, Guangzhi, 5591 DZ Heeze (NL); SIFALAKIS, Emmanouil, 6531 RW Nijmegen (NL); YOUSEFZADEH, Amirreza, 5658 EW Eindhoven (NL); DETTERER, Paul, 5704 KX Helmond (NL)
(74) Representative: IP HILLS NV

(57) **Abstract**

A computer-implemented method for classifying pixel data comprising an object of an object type. The method comprises the steps of: determining, by a first neural network, from the pixel data, a centre and a stride for a predetermined kernel, wherein the kernel comprises at least part of the object when placed over the pixel data in accordance with the centre and the stride; filtering the pixel data by subsequently convolving the pixel data with the kernel at locations defined by the centre and stride, to obtain reduced pixel data thereby comprising at least part of the object, wherein the reduced pixel data has a predetermined resolution smaller than a data resolution of the pixel data; and classifying, by a second neural network, the reduced pixel data to the object type, thereby obtaining an object type classification.

## Description

### Technical Field

The present invention generally relates to a method for classifying pixel data comprising an object of an object type.

### Background

Object classification refers to identifying if an object of a certain type is present in given input pixel data, e.g. image data. Artificial neural networks, ANNs, are well-suited for this task, due to their ability to exploit complex underlying data dependencies. In applications where extensive computational resources are available, such as for example in data centres, ANNs may be highly performant. However, there exist applications where computing power and memory are much more limited, such as edge computing. Especially with pixel data evolving to increasingly higher resolutions, it becomes a challenge to provide an ANN algorithm that remains effective even with restricted resources available. By resolution is meant the amount of pixels in the pixel data.

### Summary

According to some aspects, there is provided the subject matter of the independent claims. Some further aspects are defined in the dependent claims.

According to a first example aspect, a computer-implemented method is provided for classifying pixel data comprising an object of an object type. The method comprises a step of determining, by a first neural network, from the pixel data, a centre and a stride for a kernel having a predetermined size and predetermined kernel coefficients. The method further comprises a step of filtering the pixel data by subsequently applying the kernel coefficients to the pixel data at locations defined by the centre and stride, thereby covering a region of interest of the pixel data that comprises at least part of the object, to obtain reduced pixel data, wherein the reduced pixel data has a predetermined resolution smaller than a data resolution of the pixel data. The method further comprises a step of classifying, by a second neural network, the reduced pixel data to the object type, thereby obtaining an object type classification.

The classification task may also be referred to as inference or evaluation of a result by a pre-trained neural network. The result of the classifying may be referred to as the object type classification and may, for example, be an object type or may be a probability relating to an object type.

The kernel coefficients are the weights of the kernel and may also be referred to as kernel values or kernel entries. The kernel has the same dimensionality as the pixel data, yet has a smaller size. For example, the pixel data and the kernel may both be two-dimensional, and the pixel data may have a size of 128-by-128 pixels and the kernel size may be 10-by-10 pixels.

The kernel may also be referred to as filtering kernel, since it is used for performing the filtering step. By predefining the kernel size and kernel coefficients, the kernel is a fixed, specific kernel that is moved over the pixel data during the filtering. The locations of the pixel data where the kernel is applied are defined by the centre and the stride. In the filtering step, the kernel is moved over the pixel data at locations specified by the centre and stride obtained by the first neural network. The centre, or kernel centre, may be a coordinate of the pixel data that corresponds to the coefficient located in the middle of the kernel, such that the kernel is arranged around that centre. The stride indicates the distance, in pixels, between subsequent kernel locations and may be the same in every dimension of the pixel data.

During the filtering process, the filtering kernel moves over a limited region, also referred to as the region of interest, ROI, of the pixel data. The filtering step is performed over the ROI, while other pixels of the pixel data are disregarded. The ROI is determined by the centre and stride, which determine where the kernel is placed, as well as by the kernel size, which determines the extent or reach of the kernel. The centre determines the location of the ROI, while the stride and kernel size determine the size of the ROI. The first neural network determines the ROI of the pixel data that is used for performing the classification by providing the centre and the stride such that the ROI comprises at least part of the object to be classified.

Reduced pixel data is derived by filtering the ROI using the kernel. In other words, the reduced pixel data is a filtered version of the ROI using the filtering kernel. The resolution or size of the reduced pixel data is predetermined, i.e. fixed, and determines the number of locations where the kernel is placed. The predetermined resolution of the reduced pixel data also determines the ROI along with the centre, stride and kernel size. In particular, the resolution of the reduced pixel data determines the ROI size along with the stride and kernel size. At the locations defined by the centre and stride, also referred to as positions, the filtering kernel is virtually placed over the pixel data and a convolution operation is performed. The result of the convolution is attributed to corresponding entries of the reduced pixel data. Each pixel in the reduced pixel data is a linear combination of pixel data pixels using the kernel coefficients as weights at a corresponding location of the filtering kernel that is determined by the centre and stride. The reduced pixel data, having a size smaller than the pixel data, is filled up as the kernel makes stop at the subsequent locations. After completion of the convolution step, the kernel has moved over the ROI. It is noted that there is no required order in which the locations need to be visited by the kernel. Applying the kernel at the different locations is an operation that may be performed sequentially or in parallel and in any order.

The ROI comprises the pixels that the kernel has covered and, hence, the pixels that are taken into account for the classification step. By disregarding all data pixels outside of the ROI, the method provides a so-called 'hard attention' scheme. Hard attention refers to the focus on only part of the input data to such an extent that all other parts are ignored and not used during further data processing steps. The resolution of the reduced pixel data, i.e. the predetermined resolution, is a fixed resolution unrelated to the size of the ROI and the resolution of the pixel data.

The first neural network and the second neural network combinedly process the pixel data and are advantageously pre-trained end-to-end.

By providing the first and second separate neural networks, the problem of classification is advantageously divided into two sub-problems of: 1) locating an object and 2) classifying the object. This separation allows providing two smaller neural networks that are each trained to very efficiently perform a single task, instead of a single, larger neural network to perform both tasks 1) and 2). The first and second neural networks require many less coefficients to be able to effectively perform classification because they are trained for a much more specific task. The first neural network is configured to locate the ROI comprising at least part of the object to be classified, by providing the centre and stride of the kernel. The parameters outputted by the first neural network are used to construct a compact representation of the pixel data, i.e. the reduced pixel data, containing only the region of interest. The first neural network enables focusing on a limited region of the pixel data that comprises the object to be classified. The second neural network is configured to classify the reduced pixel data instead of the pixel data inputted to the signal processing scheme. Since the second neural network only classifies the reduced pixel data, all pixels outside of the ROI are neglected. By only considering the ROI, the classification can be performed with less memory capabilities and with less calculations, resulting in an increased efficiency. The uncomplicated and therefore efficient scheme keeps the classification process manageable and introduces very limited overhead. The method may provide a faster result using limited resources, making it useable for low-cost applications such as edge computing.

The method can handle any resolution larger than the predetermined resolution, including very high resolutions, while being able to exploit data of a superior resolution to obtain better accuracy. Irrespective of the resolution of the pixel data, the pixel data is compressed into the reduced pixel data having a fixed size. However, within the ROI, the high resolution of the data remains, thereby preserving the quality of the pixel data. The filtering may thus advantageously be performed on a ROI of the pixel data having a high resolution without causing image degradation. In addition, the method is able to do this without increasing computational cost with increasing pixel data resolution, since the kernel only passes over the ROI and fills up the fixed sized reduced pixel data. Due to the fixed resolution, it takes a same amount of calculations to fill up the reduced pixel data, irrespective of the data resolution. Further, the method retains its efficiency even when the pixel data has a relatively low fraction of pixels that comprise the object. In such a case, the stride found by the first neural network may be very small, resulting in a small ROI.

Inherent to neural networks is their so-called black box property. A neural network may not provide insight into how dependencies are found during the process of classification. The method, on the other hand, allows understanding of the internal operation by providing the filtering step enclosed between the two neural networking steps. For example, the ROI illustrates the location of the object.

According to further example embodiments, the kernel is a Gaussian kernel.

A Gaussian kernel may also be referred to as a Gaussian filter. A Gaussian kernel is a kernel having coefficients that approximate the Gaussian function in all directions. Advantageously, a Gaussian kernel approaches a differentiable function, thereby enabling backpropagation throughout the first and second neural networks for a more efficient training.

According to further example embodiments, the method further comprises obtaining higher-resolution pixel data; and down-sampling the higher-resolution pixel data, thereby obtaining the pixel data.

Down-sampling comprises reducing the size or resolution of the pixel data. Down-sampling may, for example, comprise max pooling, average pooling or min pooling. Down-sampling advantageously reduces the computational complexity, resulting in a faster classification.

According to a second example aspect, a computer-implemented method is provided for training a neural network. The neural network comprises a first neural network, a convolution filter and a second neural network. The first neural network is configured to determine a centre and a stride for a kernel, having a predetermined kernel size and predetermined kernel coefficients, from pixel data comprising an object of an object type, the pixel data having a data resolution. The convolution filter is configured to filter the pixel data by subsequently applying the kernel coefficients to the pixel data at locations defined by the centre and stride, thereby covering a region of interest of the pixel data that comprises at least part of the object to obtain reduced pixel data, and to obtain reduced pixel data, wherein the reduced pixel data has a predetermined resolution smaller than the data resolution. The second neural network is configured to classify the reduced pixel data to an object type classification. The method comprises a step of providing a set of annotated pixel data having a data resolution larger than the predetermined resolution, and annotated with a certain object type; and a step of training the neural network with the set of annotated pixel data, thereby jointly training the first and second neural networks.

The neural network provided for classification by the method for according to the first example aspect corresponds to the neural network trained by the method according to the second example aspect.

By providing two separate, relatively small neural networks, training is faster than for a single, larger neural network having to perform both tasks 1) and 2). The method allows for an end-to-end training process with limited overhead.

According to further example embodiments, the learning method comprises performing backpropagation with a cross-entropy loss function.

Advantageously, the first neural network and the second neural network are jointly trained using a single loss function that is shared by the first and second neural networks. This enables the components according to the method, i.e. the first neural network, the kernel filtering and the second neural network, to be handled and trained as one entire neural network. By implementing one loss function encompassing training errors of both neural networks, the first and second neural networks can be trained more efficiently. In addition, the combined effect of the training results in better-performing first and second neural networks, since the training of the first neural network leads to neural network coefficients that will provide a centre and stride that inherently result in better classification performance by the second neural network. As such, a cooperative effect may be achieved between the two neural networks.

The first and second neural networks may comprise any type of neural network, comprising any number of layers, the layers being of any type, e.g. convolutional layers, fully-connected layers, recurrent layers, spiking neural network layers or any other types of neural networks. Advantageously, the methods according to the first and second example aspect are not restricted to a specific neural network architecture.

According to further example embodiments, the first and second neural networks are convolutional neural networks, CNNs.

According to further example embodiments, the first neural network is a CNN and the second neural network is a fully-connected, FC, neural network.

According to further example embodiments, the set of annotated pixel data comprises the Neuromorphic Modified National Institute of Standards and Technology, N-MNIST, dataset.

The N-MNIST dataset comprises images of handwritten digits.

According to further example embodiments, the first neural network is a recurrent neural network, RNN, and the second neural network is a CNN.

According to further example embodiments, the set of annotated pixel data comprises the Marshalling Signals dataset.

The marshalling signals dataset comprises images of aircraft marshalling signals.

According to further example embodiments, the learning method is a teacher-student learning method.

According to further example embodiments, the first and second neural networks are spiking neural networks, SNNs.

According to further example embodiments, the set of annotated pixel data comprises the Dynamic Vision Sensor, DVS, gesture dataset.

According to a third example aspect, a data processing system is provided. The data processing system comprises at least one processor and at least one memory including computer program code. The at least one memory and computer program code are configured to, with the at least one processor, carry out the method according to the first example aspect and/or the method according to the second example aspect.

According to a fourth example aspect, there is provided a non-transitory computer readable medium comprising program instructions stored thereon for carrying out the method according to the first example aspect and/or the method according to the second example aspect.

According to a fourth example aspect, there is provided a non-transitory computer readable medium comprising program instructions that, when executed by a computer, cause the computer to carry out the method according to the first example aspect and/or the method according to the second example aspect.

### Brief Description of the Drawings

Fig. 1 shows a schematic of a method for classifying pixel data comprising an object of an object type.
Fig. 2 shows a schematic of a step of filtering pixel data by subsequently convolving the pixel data with a kernel.
Fig. 3 shows a schematic of a step of filtering pixel data by subsequently convolving the pixel data with a kernel.
Fig. 4 shows an example of intermediate results obtained by performing a method for classifying pixel data comprising an object of an object type;
Fig. 5 shows an example embodiment of a suitable computing system for classifying pixel data.

### Detailed Description of Embodiment(s)

The present disclosure relates to classification of an object to an object type. An object type is a class indicating a category to which an object belongs. For example, an object type may be `cats' and an image comprising a cat may be considered an object belonging to the object type of `cats'. Classification can be performed on pixel data. Pixel data is a set of pixels that make up a displayable visual representation, such as an image, a pixel being the smallest element of the visual representation. For example, in the case of an image, a pixel may be represented by a red-green-blue, RGB, vector of three values determining or by a grayscale value represented by 8 bits. Pixel data can be represented by a matrix, wherein each pixel value is stored in a corresponding entry of the matrix. The pixel data and corresponding matrix may be two-dimensional, three-dimensional, four-dimensional or of an even higher dimensionality. It is also possible to perform a pre-processing step, prior to the classification, of dimensionality reduction on higher dimensional data, for example to render the data interpretable as a two-dimensional image.

Object classification is a crucial task in a great variety of applications, including computer vision, e.g. in autonomous vehicles and robotics. There also exist other applications of analysing high-dimensional data having a relatively small ratio of a region of interest where useful information is contained with respect to data size. An example of such an application may, for example, be the analysis of a dataset of electroencephalographic, EEG, data for detecting a certain event over time. The classification task is especially challenging in applications at the edge or extreme edge, e.g. in smartphones or wearable devices, due to limited computational resources, memory and power. In addition, privacy may be an issue requiring edge devices to perform more tasks locally to avoid sending sensitive information over a communication channel.

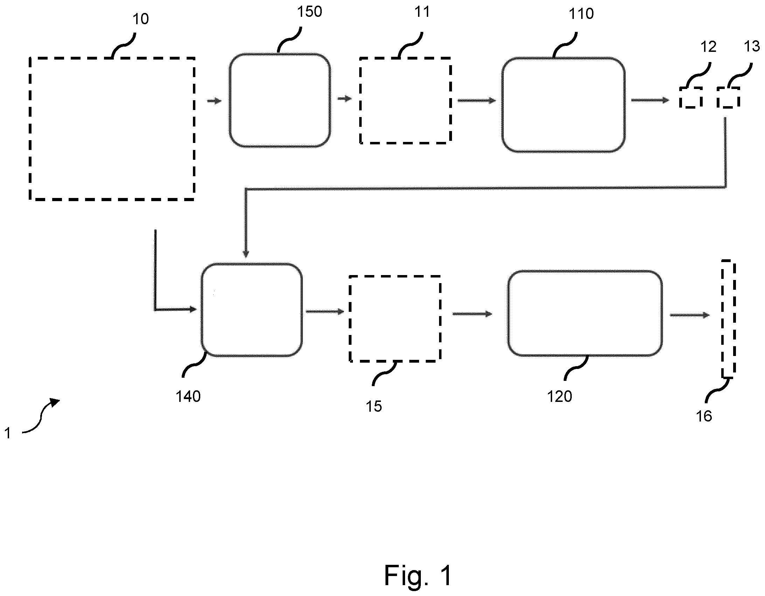

Figure 1 shows the steps of a method 1 for performing classification of pixel data 10 comprising an object of an object type. The pixel data 10 may, for example, comprise a two-dimensional image, e.g. a coloured image or a grayscale image. In Figure 1, the dashed squares represent data, while the solid rounded shapes represent steps of the method 1. The pixel data 10 may optionally be down-sampled in step 150 to proceed with down-sampled pixel data 11 of a smaller size or resolution. This makes the following step for the first neural network 110 less computational-intensive. Neural network 110 determines, from the pixel data 10, or from the pixel data 11, a centre 12 and a stride 13 for a kernel 14 (not shown in Figure 1) having a predetermined size and predetermined coefficients. The centre 12 and the stride 13 define what ROI of the pixel data is to be used in the subsequent step to extract a representation of the object, i.e. reduced pixel data 15, from the pixel data 10.

Since the pixel data is two-dimensional, the kernel is also two-dimensional, yet has a smaller resolution than the pixel data. The ROI comprises at least part of the object after placing the kernel 14 over the pixel data 10 according to the centre 12 and the stride 13. The centre 12 may, for example, comprise an x-coordinate and a y-coordinate in case the pixel data 10 is an image. The stride 13 may be a natural number. Alternatively, the stride may comprise a stride in the x-direction and a stride in the y-direction, allowing for rectangular-shaped kernels instead of only square-shaped kernels. Next, the pixel data 10 is filtered by performing a convolution of the ROI of the pixel data 10 with the kernel 14, at the pixels' locations defined by the obtained centre 12 and stride 13 resulting in the reduced pixel data 15 of a fixed, predetermined size. The kernel 14 having a fixed size is element-wise multiplied with the pixel data at non-fixed locations of the pixel data. The kernel 14 may, e.g. be a Gaussian kernel. Alternatively, the kernel may perform max pooling, i.e. retaining the maximal value over all the pixels within the kernel, or dynamic average pooling. By dynamic average pooling is meant that an average is computed of the pixels within the kernel, the kernel size being adaptable based on the resolution of the pixel data.

Because the reduced pixel data 15 is extracted using the kernel comprising at least part of the object, the reduced pixel data 15 also comprises at least part of the object. In a final step, the reduced pixel data 15 is classified, using second neural network 120 to the object type, thereby obtaining an object type classification 16. The object type classification may, in general, be a vector comprising an entry for each possible object type, wherein each entry value represents a probability of the reduced pixel data 15 comprising an object of the object type corresponding to that entry.

By letting neural network 120 classify the reduced pixel data 15 instead of the pixel data 10, hard attention is performed, i.e. the input data 10 is in a sense cropped thereby disregarding a certain amount of pixels. Hard attention is to the contrary of the concept of soft attention, wherein the pixels are weighted according to varying importance, yet retaining in every step a contribution of each pixel. Soft attention requires retaining all pixels as well as their weights in memory as well as processing all weighted pixels in further steps.

During training of the corresponding neural network, the training data passes through the same data flow as illustrated in Figure 1.

The neural network comprising neural network 110, the filtering operation 140 and neural network 120 may be a CNN, FC, RNN or SNN or any other type of neural network as a whole, wherein neural network 110 and neural network 120 are each of the same type. Alternatively, neural network 110 and neural network 120 may be of a different type, the neural network then being a mixed-type neural network.

As a first example, neural network 110 may comprise the following subsequent layers: a first convolutional layer, a first max-pooling layer, a second convolutional layer, a second max-pooling layer and a fully connected layer that provides the centre and stride. Neural network 120 may have a same structure of layers, wherein the fully connected layer provides the retrieved object type. The N-MNIST dataset was applied to such an architecture. The object types of the N-MNIST dataset comprise the digits zero to nine. This type of network can be trained using back-propagation.

As a second example, neural network 110 may comprise the following subsequent layers: a first convolutional layer, a first max-pooling layer, a second convolutional layer, a second max-pooling layer and a fully connected layer that provides the centre and stride. Neural network 120 may have comprise a first and a second fully connected layer, wherein the second fully connected layer provides the retrieved object type. The N-MNIST dataset was applied to such an architecture. This type of network can be trained using back-propagation.

Using convolutional networks, a 2 times reduction of floating point operations may be achieved, with the N-MNIST dataset, as compared to full resolution processing, i.e. without applying hard attention.

As a third example, neural network 110 may comprise the following subsequent layers: a first convolutional layer, a first max-pooling layer, a second convolutional layer, a second max-pooling layer, a third convolutional layer, a third max-pooling layer, a recurrent layer and a fully connected layer that provides the centre and stride. Neural network 120 may have the first 6 layers of alternating convolutional and max-pooling layers as for neural network 110, followed by a first fully connected layer and a second fully connected layer that provides the retrieved object type. The DVS dataset, comprising 128-by-128 images, was applied to such a neural network. The object types of the DVS dataset comprise a series of recognisable gestures. The marshalling signals dataset, comprising 346-by-224 images, was also applied to a neural network having this type of architecture. The object types of the marshalling signals dataset comprise a series of recognisable marshalling signals. This type of network can be trained using back-propagation.

Using recurrent neural networks, a 46 times reduction of floating point operations may be achieved with the DVS dataset, as compared to full resolution processing, i.e. without applying hard attention; and an 18 times reduction of floating point operations with the marshalling signals dataset.

As a fourth example, neural network 110 may subsequently comprise the following layers: a first recurrent SNN layer, a first feed-forward SNN layer, a second recurrent SNN layer and a second feed-forward SNN layer. Neural network 120 may subsequently comprise a feed-forward SNN layer and a recurrent SNN layer. The DVS dataset was applied to such a neural network. This type of network can be trained using a teacher-student or a knowledge dissemination paradigm training procedure.

It is noted that although the first neural network 110 and the second neural network 120 may comprise the same type of layers, these layers are different in both neural networks since the neural networks 110, 120 are designed for differently sized inputs and outputs.

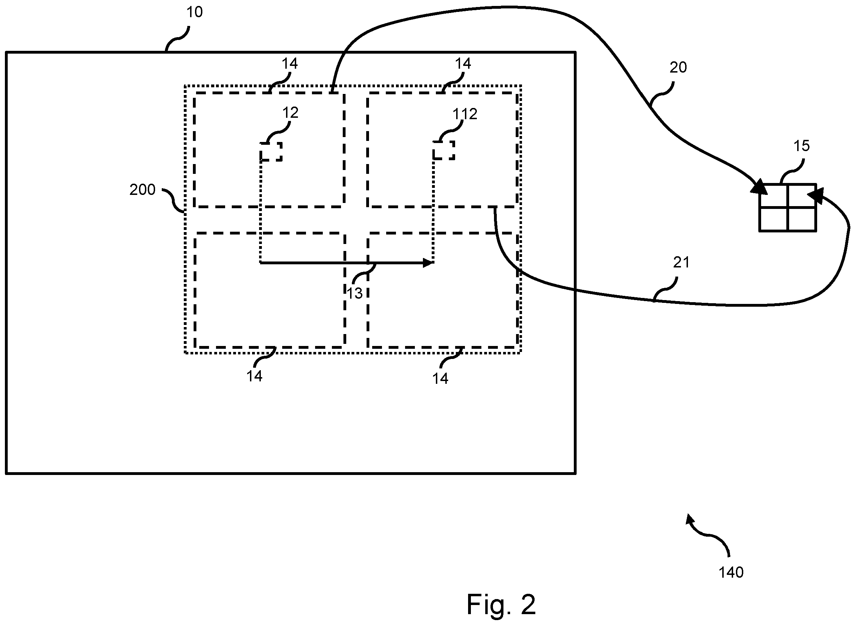

In Figure 2, the filtering step 140 is further elucidated. The kernel 14 is shown at four different pixel data locations. The kernel is defined by a kernel centre and kernel dimensions, e.g. the kernel is a 2-by-2 matrix. Each location corresponds to a single entry in the reduced pixel data 15, as illustrated on the right of the pixel data 10 using arrows 20, 21. In practice, the reduced pixel data 15 may have a larger resolution than 2-by-2 as shown in Figure 2. According to this example, the reduced pixel data 15 may be filled from the top left corner to the bottom right corner. In this example, the kernel 14 may first be virtually positioned with its centre 12 located as shown in Figure 2, i.e., at a first location as defined by the centre and stride obtained from the first neural network. After performing a convolution, the kernel 14 is moved with stride 13 so that to the kernel centre is now at a position indicated by reference numeral 112. Next, the kernel 14 may be moved to the bottom left position and subsequently to the bottom right position. In the example of Figure 2, the stride 13 is larger than half of the kernel width, thereby avoiding an overlapping of subsequent kernel positions. In this example, strictly spoken, the corresponding region of interest, ROI, 200 comprises disconnected regions of pixel data taken account in the convolution operations, i.e., the size of the disconnected regions is defined by the kernel dimensions. The region of interest 200 may, however, be considered as the region indicated by reference numeral 200, indicating the region of the pixel data where the object may be according to the centre 12 and stride 13 found by neural network 110.

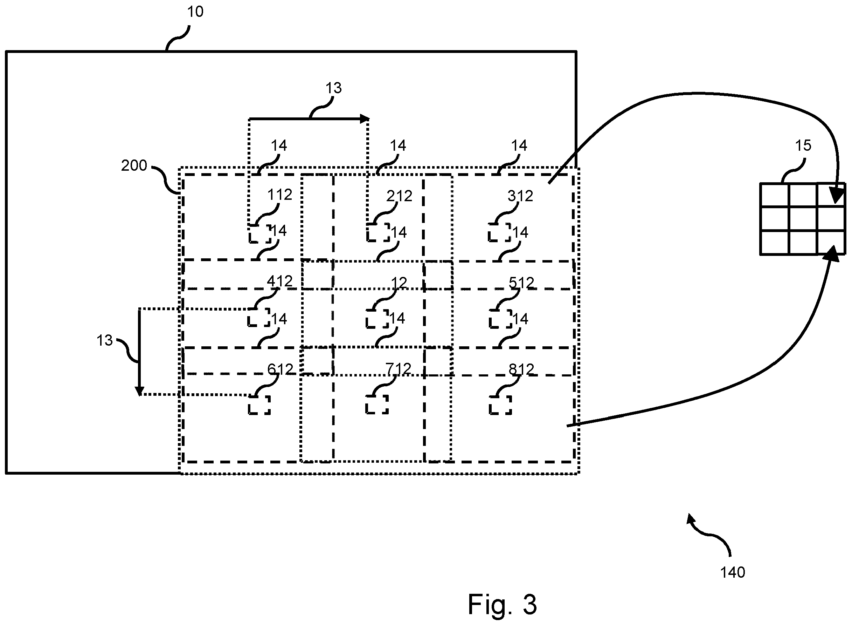

Figure 3 shows another example of the filtering step 140. Same reference numerals as in Figure 2 denote the same functional elements. Here, the reduced pixel data 15 is shown as a 3-by-3 matrix. In this example, contrary to the example of Figure 2, the kernel 14 is first placed at a position with centre 12 of the kernel coinciding with a centre pixel of the ROI 200. The middle pixel of the reduced pixel data 15 may, in this case, be calculated first, followed by the kernel having its centre placed at positions indicated with reference numerals 112, 212, 312, 412, 512, 612, 712, 812. The movement direction and order of filling up the reduced pixel data 15 may be any order and is not a restrictive component of the classification method 1.

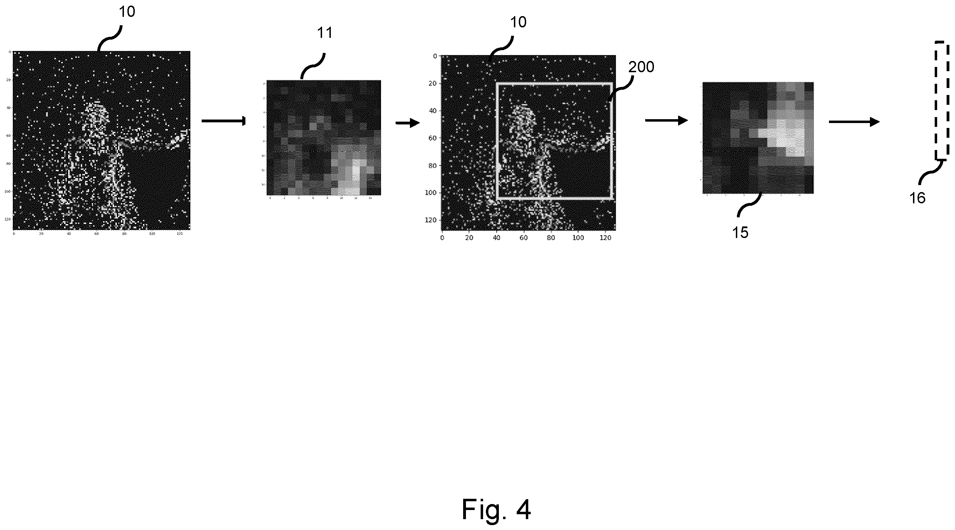

Figure 4 illustrates the data flow through the method 1 for an example implementation using the DVS dataset. Thereby, Figure 4 illustrates the interpretability introduced by the scheme with two separate neural networks 110,120 linked by a filtering operation 140. In this example, the object is a person performing a certain gesture, and possible object types are a set of detectable gestures. The object type classification vector 16 comprises an entry for each possible detectable gesture, wherein each entry represents a probability for the object being of that object type.

The neural networks 110,120 can be jointly trained according to a supervised learning scheme by feeding the neural network with labelled pixel data. Input pixel data is, in a first step, fed to the first neural network which determines a centre and stride by applying its initialised network coefficients. This centre and stride are then applied on the input pixel data using a kernel with a predetermined size and coefficients, resulting in one instance of reduced pixel data. The extracted reduced pixel data is provided to the second neural network, which determines a classification using its initialised network coefficients. These may be different from the initial values of network coefficients of the first neural network. Then, the recovered classification is compared to a label of the input pixel data and an error is calculated based on the comparison. The error is incorporated into a loss function that is used to update the network coefficients of both the first neural network and the second neural network. This process is repeated for an entire dataset, thereby iteratively updating the network coefficients of the first and second neural networks until the resulting error undercuts a predetermined maximal error. The updating of the network coefficients can advantageously be performed by backpropagation when a differentiable kernel, such as the Gaussian kernel, is applied. Backpropagation works by calculating derivatives of coefficients throughout a network to find an optimum. By choosing a differentiable kernel, the coefficients of the first neural network can be trained in conjunction with the second neural network as results can be linked backwards to the first neural network thanks to the differentiability of the kernel. The differentiable kernel can be treated as a neural network layer between the first and second neural networks, thereby forming a single neural network with the first and second neural networks. This additional layer comprises the predetermined kernel size and kernel coefficients which are fixed parameters that are not amended during the training process. This results in first and second neural networks that are jointly optimised in correspondence with the kernel size and coefficients.

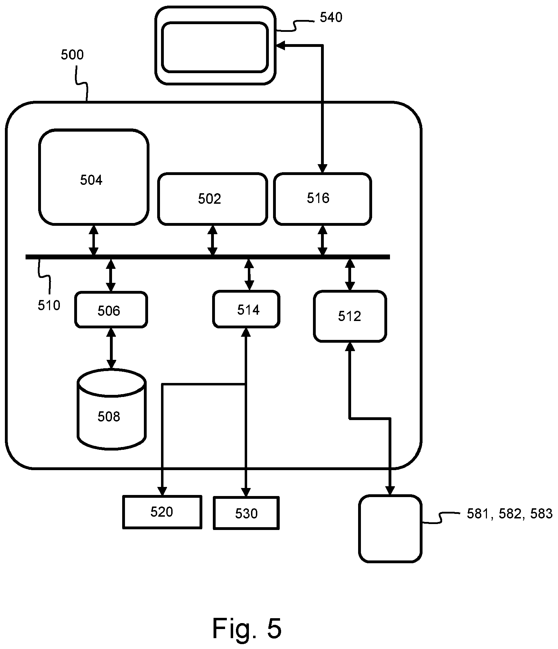

Figure 5 shows a suitable computing system or computer system 500 enabling to implement embodiments of the system. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. For example, the conductors may comprise one or more wireless conductors. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. Computing system 500 could thus be configured to comprise program instructions stored thereon for performing the computer-implemented method according to the first example aspect and/or the second example aspect.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (iii) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for classifying pixel data (10) comprising an object of an object type, wherein the method comprises the steps of:
- determining, by a first neural network (110), from the pixel data, a centre (12) and a stride (13) for a kernel (14), having a predetermined kernel size and predetermined kernel coefficients;
- filtering (140) the pixel data by subsequently applying the kernel coefficients to the pixel data at locations defined by the centre and stride, thereby covering a region of interest (200) of the pixel data that comprises at least part of the object to obtain reduced pixel data (15), wherein the reduced pixel data has a predetermined resolution smaller than a data resolution of the pixel data; and
- classifying, by a second neural network (120), the reduced pixel data (15) to the object type, thereby obtaining an object type classification.

2. The method according to claim 1, wherein the kernel (14) is a Gaussian kernel.

3. The method according to claim 1 or 2, further comprising:
- obtaining higher-resolution pixel data; and
- down-sampling (150) the higher-resolution pixel data, thereby obtaining the pixel data.

4. A computer-implemented method for training a neural network (1), the neural network comprising:
- a first neural network (110), configured to determine a centre (12) and a stride (13) for a kernel (14), having a predetermined kernel size and predetermined kernel coefficients, from pixel data (10) comprising an object of an object type, the pixel data (10) having a data resolution;
- a convolution filter configured to filter the pixel data by subsequently applying the kernel coefficients to the pixel data at locations defined by the centre and stride, thereby covering a region of interest (200) of the pixel data that comprises at least part of the object to obtain reduced pixel data (15), and to obtain reduced pixel data (15), wherein the reduced pixel data has a predetermined resolution smaller than the data resolution; and
- a second neural network (120), configured to classify the reduced pixel data (15) to an object type classification;
wherein the method comprises the following steps:
- providing a set of annotated pixel data having a data resolution larger than the predetermined resolution, and annotated with a certain object type;
- training the neural network with the set of annotated pixel data, thereby jointly training the first and second neural networks.

5. The method according to any one of claims 4, wherein the learning method comprises performing backpropagation with a cross-entropy loss function.

6. The method according to any one of claims 4 or 5, wherein the first and second neural networks are convolutional neural networks, CNNs.

7. The method according to any one of claims 4 or 5, wherein the first neural network is a CNN and wherein the second neural network is a fully-connected, FC, neural network.

8. The method according to claim 6 or 7, wherein the set of annotated pixel data comprises the Neuromorphic Modified National Institute of Standards and Technology, N-MNIST, dataset.

9. The method according to any one of claims 4 or 5, wherein the first neural network is a recurrent neural network, RNN, and wherein the second neural network is a CNN.

10. The method according to claim 9, wherein the set of annotated pixel data comprises the Marshalling Signals dataset.

11. The method according to claim 4, wherein the learning method is a teacher-student learning method.

12. The method according to claim 11, wherein the first and second neural networks are spiking neural networks, SNNs.

13. A data processing system (1) comprising at least one processor and at least one memory including computer program code, the at least one memory and computer program code configured to, with the at least one processor, carry out the method according to any one of the preceding claims.

14. A non-transitory computer readable medium comprising program instructions stored thereon for carrying out the method according to any one of preceding claims 1-12.

15. A non-transitory computer readable medium comprising program instructions that, when executed by a computer, cause the computer to carry out the method according to any one of preceding claims 1-12.
